# EUROPÄISCHE PATENTSCHRIFT

(11) **EP 1 829 451 B1**
(45) Veröffentlichungstag und Bekanntmachung des Hinweises auf die Patenterteilung: **28.05.2008**
(21) Anmeldenummer: 06004279.3
(22) Anmeldetag: 02.03.2006
(51) Int. Cl.: A22C 11/08

(54) **Füllmaschine und Verfahren zum Zuführen von pastösen Massen aus einem Trichter in ein Förderwerk**
Machine and method for use in feeding viscous masses from a loading bin to a sausage filling machine
Dispositif et méthode pour amener du matériau pateux à une machine de mise en buyau de saucisses

(43) Veröffentlichungstag der Anmeldung: 05.09.2007
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker, Kinkeldey, Stockmair & Schwanhäusser Anwaltssozietät

(56) Entgegenhaltungen:
- EP-A- 0 569 959
- DE-A1- 4 417 906
- DE-C- 459 031
- US-A- 4 787 826
- US-B1- 6 234 890

## Beschreibung

Die Erfindung betrifft eine Füllmaschine und eine Verfahren zum Abfüllen von pastöser Masse, insbesondere Wurstbrät, gemäß den Oberbegriffen der Ansprüche 1 und 9.

Eine solche Füllmaschine bzw. ein solches Verfahren sind beispielsweise bereits aus der US-A-4 787 826 bekannt. Hier umfasst die Fördereinrichtung eine Schnecke sowie einen nicht beweglichen Stopper, der sich in das obere Ende der Schnecke hinein erstreckt.

Aus der DE-A-44 17 906 ist bereits ein geschlossener Vakuumtrichter bekannt.

Aus der DE 459 031 ist ebenfalls bereits eine Fleischmisch- und Ballendrückmaschine für die Wurstherstellung bekannt, die einen angetriebenen Mischarm und eine darunter angeordnete Förderschnecke umfasst.

Derartige Füllmaschinen zum Abfüllen von pastöser Masse, bei denen die pastöse Masse aus einem Trichter in ein Förderwerk eingebracht wird und von dort aus in ein Füllrohr ausgestoßen wird, um Wursthüllen mit pastöser Masse zu befüllen, sind aus dem Stand der Technik bereits bekannt.

Üblicherweise werden bei der Wurstproduktion Füllmaschinen verwendet, deren Fülltrichter oben offen ist. Dabei wird das sich im Trichter befindliche Wurstbrät von einer umlaufenden Zubringerkurve zur Mitte hin und in begrenztem Umfang auch nach unten zum Förderwerk gefördert, wobei sich an der Außenseite dieser Zubringerkurve üblicherweise ein Schaber befindet, der das Brät vom Trichterrand löst. Im Förderwerk wird mittels einer Vakuumpumpe ein Unterdruck erzeugt, um dem Wurstbrät Luft und damit Sauerstoff zu entziehen, womit die Haltbarkeit der Wurst verlängert wird. Gleichzeitig entsteht durch den Unterdruck im Förderwerk ein Druckunterschied Δp zur Oberfläche der Trichterbefüllung, der dazu führt, dass die pastöse Masse durch den atmosphärischen Luftdruck in die Förderwerkskammer gedrückt wird.

Die Evakuierung des Wurstbräts kann mit diesem Verfahren nur in eingeschränktem Maß erfolgen. Um dem Wurstbrät noch mehr Luft und damit Sauerstoff zu entziehen, werden geschlossene Trichter eingesetzt, wobei bereits im Trichter ein Unterdruck erzeugt wird. Das Problem dabei ist, dass damit der Differenzdruck zwischen dem Trichter und dem Förderwerk kleiner wird und sich damit die Befüllung der Förderwerkskammer verschlechtert, was wiederum zu Ungenauigkeiten der Portionsgewichte führt. Je besser die Füllmasse im Trichter evakuiert wird, d. h. je niedriger der Druck im Trichter ist, desto kleiner wird der Druckunterschied Δp zwischen Trichter und Förderwerk und umso schlechter wird die Befüllung der Förderwerkskammern. Unterstützend zu diesem atmosphärischen Differenzdruck Δp wirkt zur Befüllung des Förderwerks noch ein aus der Gewichtskraft resultierender und vom Füllstand des Trichters abhängiger statischer Druck.

Somit ergibt sich beim Stand der Technik der Nachteil, dass bei einem offenen Trichter der Evakuierungsgrad nur sehr gering ist.

Bei einem geschlossenen Trichter, bei dem der Evakuierungsgrad verbessert ist, ist ein geringerer Restluftanteil im Produkt erreichbar (wobei Δp gering ist, z.B. 30 mbar, d.h. z.B. Druck im Trichter 50 mbar, im Förderwerk 20 mbar). Jedoch kann das Förderwerk nur schlecht befüllt werden, wodurch eine schlechte Gewichtsgenauigkeit der Produkte erreicht wird, da durch fehlenden Differenzdruck keine vollständige Befüllung des Förderwerks mit pastöser Masse möglich ist. Dieses Problem besteht unabhängig von Förderwerksprinzip (Kolbenförderwerk, Flügelzellenförderwerk, Schneckenförderwerk, etc.) und tritt insbesondere bei festen Massen auf. Um bei dem geringen Differenzdruck Δp noch eine ausreichend hohe Förderleistung von dem Trichter in das Förderwerk zu erreichen, sind große Förderwerkseinlassquerschnitte erforderlich. Dadurch ergibt sich jedoch unter anderem, dass beim Leerfahren der Maschine viel Restmenge in der Maschine verbleibt, da kein Brät mehr ins Förderwerk gelangt, sobald ein Verbindungskanal im Brät zwischen Trichter und Förderwerk entsteht und damit ein Druckausgleich zwischen den beiden Behältern erfolgen kann. Insgesamt sind nur relativ geringe Fördermengen möglich.

Wird der Druckunterschied Δp zwischen Trichter und Förderwerk höher gewählt, z. B. 80 mbar (z. B. Druck im Trichter 100 mbar und im Förderwerk 20 mbar), kann die Befüllung des Förderwerks mit Masse besser erfolgen, d. h. es ergibt sich eine bessere Gewichtsgenauigkeit des Endprodukts, jedoch eine schlechtere Evakuierung der Masse, d. h. ein höherer Restluftanteil im Produkt.

Der Druckunterschied Δp sollte in einer Größenordnung liegen, dass er eine möglichst optimale Evakuierung der Masse erlaubt und gleichzeitig die Masse in das Förderwerk drückt. Prinzipbedingt kann dabei keine der beiden Aufgaben optimal erfüllt werden.

Hiervon ausgehend liegt der vorliegenden Erfindung die Aufgabe zugrunde, eine Füllmaschine sowie ein Verfahren zum Abfüllen von pastöser Masse bereitzustellen, die ermöglichen, das Förderwerk kontinuierlich und vollständig mit Masse zu befüllen, unabhängig vom Evakuierungsgrad und vom Füllstand der pastösen Masse.

Erfindungsgemäß wird diese Aufgabe durch die Merkmale der Ansprüche 1 und 9 gelöst.

Die vorliegende Erfindung erlaubt ein zuverlässiges Befüllen des Förderwerks mit Wurstbrät unabhängig vom Evakuierungsgrad und vom Füllstand der pastösen Masse im Trichter. Durch die erfindungsgemäße Kombination von einer Zubringerkurve und einer innerhalb der Zubringerkurve angeordneten Förderschnecke kann die pastöse Masse in das Förderwerk transportiert werden, auch wenn der Druckunterschied Δp zwischen Förderwerk und Trichter gering ist. Die Förderwirkung erfolgt darüber hinaus unabhängig vom Füllstand und somit auch unabhängig von dem statischen Druck. Die erfindungsgemäße Kombination aus Zubringerkurve und Förderschnecke ist sowohl bei offenem als auch bei geschlossenem Trichter möglich. Gemäß der vorliegenden Erfindung ist eine vollständige Befüllung der Förderwerkskammer und damit eine hohe Portioniergenauigkeit am Auslass des Förderwerks erreicht. Durch eine vollständige Befüllung des Förderwerks ist auch eine kontinuierliche Portionierung aus dem Förderwerk mit konstantem Füllstrom möglich. Die Fördermenge kann erhöht werden.

Vorteilhafterweise ist die Förderschnecke zentrisch zur Zubringerkurvenachse angeordnet.

Gemäß einer bevorzugten Ausführungsform ist die Zubringerkurve am Trichterrand als innen offene Schnecke angeordnet und fördert die pastöse Masse im Wesentlichen zur Trichtermitte hin. Die Förderschnecke hingegen fördert die Masse in Richtung des Förderwerks, und drückt mechanisch die Füllmasse in die Förderwerkskammer.

Gemäß einer bevorzugten Ausführungsform weisen Zubringerkurve und Förderschnecke jeweils einen eigenen Antrieb auf. Damit können unterschiedliche Geschwindigkeiten für Zubringerkurve und Förderschnecke gewählt werden. Dieser Antrieb kann durch entsprechende Motoren realisiert werden. Der Antrieb der Zubringerkurve und der Förderschnecke kann auch mechanisch gekoppelt und somit durch nur einen Motor erfolgen, wobei dann die Kopplung der beiden Fördereinrichtungen in einem festen; aber auch in einem variablen Drehzahlverhältnis realisiert werden kann.

Es ist möglich, dass die Zubringerkurve im unteren Endbereich des Trichters und die Förderschnecke im oberen Endbereich des Trichters drehbar gelagert sind. Ein solcher Aufbau bringt den Vorteil mit sich, dass ausreichend Platz für die unterschiedlichen Antriebe und Lager vorgesehen ist. Dadurch, dass das Lager für die Förderschnecke am oberen Ende des Trichters angeordnet ist, kann die Förderschnecke mit ihrem unteren Ende frei in den Trichterauslauf ragen und behindert somit nicht den Transport der pastösen Masse durch den Auslass. Die Lagerung und der Antrieb der Förderschnecke könnte beispielsweise ebenfalls von unten erfolgen, parallel zum Antrieb der Zubringerkurve.

Ferner kann die Füllmaschine eine Steuereinrichtung umfassen, über die die Drehzahl der Förderschnecke sowie die Drehzahl der Zubringerkurve abhängig oder unabhängig voneinander geregelt werden kann.

Die Drehzahlregelung der Förderschnecke und/oder der Zubringerkurve kann beispielsweise abhängig von zumindest einem der folgenden Parameter erfolgen:

Druck im geschlossenen Trichter, Druck im Bereich der Förderschnecke oder im Einlassbereich des Förderwerks, Druck im Förderwerk oder dessen Auslassbereich, Temperatur und Art der Masse, Luftgehalt der Masse, Förderleistung des Förderwerks, etc.

Vorzugsweise dreht sich die Förderschnecke schneller als die Zubringerkurve. Die Förderschnecke kann wesentlich schneller drehen als die Zubringerkurve, weil der Außendurchmesser wesentlich kleiner ist als der größte Durchmesser der Zubringerkurve. Dadurch kann ein die Masse schädigendes "Überfördem" weitestgehend verhindert werden.

Die Erfindung wird nachfolgend unter Bezugnahme der folgenden Figuren näher erläutert:
- Fig. 1: zeigt einen schematischen Längsschnitt durch eine Füllmaschine gemäß der vorliegenden Erfindung.
- Fig. 2: zeigt schematisch einen Querschnitt eines Förderwerks.

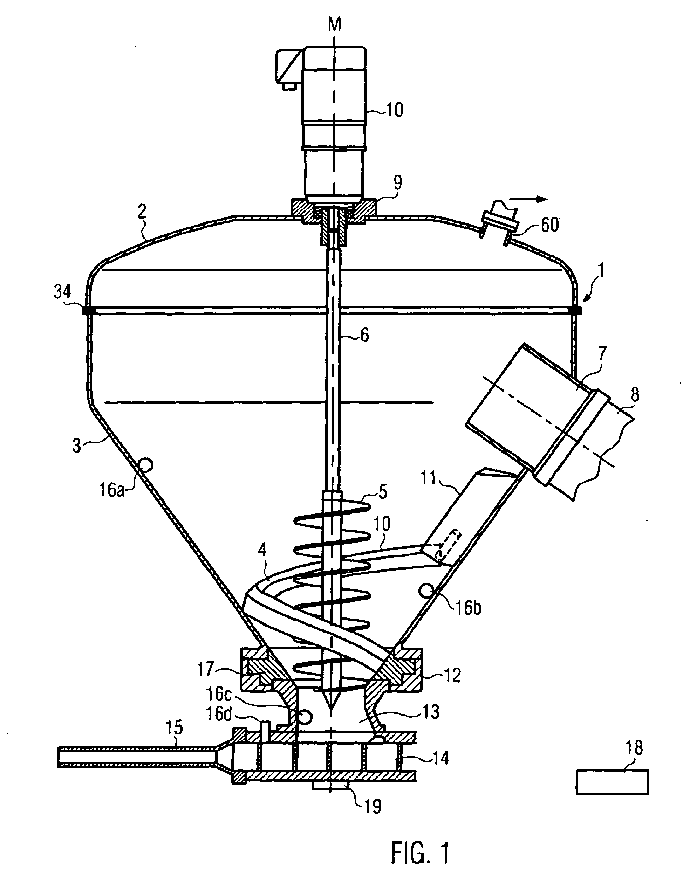

Fig. 1 zeigt eine Ausführungsform einer Füllmaschine gemäß der vorliegenden Erfindung. Die erfindungsgemäße Füllmaschine weist einen Trichter 1 auf, vorzugsweise einen Vakuumtrichter 1, der einen Deckel 2 umfasst sowie ein zumindest teilweise konisch zulaufendes Trichterteil 3. Das Trichterteil 3 und der Deckel 2 sind über eine Dichtung 34, z. B. einen Dichtring, vakuumdicht miteinander verbunden. Der Trichter 1 ist in diesem Ausführungsbeispiel ein Vakuumtrichter, in dem ein Unterdruck erzeugt werden kann. Der Vakuumtrichter 1 umfasst einen Einlass 7 zum Zuführen einer pastösen Masse aus einem nicht dargestellten Vorratsbehälter über das Zuführrohr 8. Der Trichter 1 umfasst weiter am unteren Ende, d. h. an dem dem Deckel 2 gegenüberliegenden Ende einen Auslassbereich 13 für die pastöse Masse. An dem Auslassbereich 13 ist ein Förderwerk 14 angeordnet, das die pastöse Masse aus dem Trichter 1 in ein Füllrohr 15 fördert. Eine nur schematisch dargestellte Vakuumpumpe 19 dient dazu, im Förderwerk, bzw. in den Förderwerkskammern und über einen separaten Vakuumanschluss 60 im Trichter 1 einen Unterdruck zu erzeugen. Über das Füllrohr 15 wird dann in bekannter Weise die pastöse Masse, wie beispielsweise das Wurstbrät, in dafür vorgesehene Wursthüllen geschoben.

Um die pastöse Masse aus dem Trichter 1 in das Förderwerk 14 zu fördern ist eine entsprechende Zuführeinrichtung 4, 5 vorgesehen. Gemäß der vorliegenden Erfindung umfasst die Zuführeinrichtung eine Kombination aus einer Zubringerkurve 4 und einer innerhalb der Zubringerkurve angeordneten Förderschnecke 5.

Die schneckenförmige Zubringerkurve 4 ist als innen offene Schnecke ausgebildet. Sie läuft um eine Zubringerkurvenachse, die vorzugsweise der Mittelachse M des Vakuumtrichters 1 entspricht. Dazu ist die Zubringerkurve 4 in einem entsprechenden Lager 12 im unteren Endbereich des Trichters 1 drehbar gelagert und wird über einen entsprechenden Antrieb 17, der hier beispielsweise nicht sichtbar hinter dem Lager 12 angeordnet ist, angetrieben. Die Zubringerkurve 4 ist am Trichterrand angeordnet und weist vorzugsweise einen geringen Abstand vom Trichterrand auf. Die Zubringerkurve weist somit einen Durchmesser auf, der von unten nach oben, d. h. vom unteren Endbereich 13 in Richtung des Deckels 2, zunimmt. Der Querschnitt der Zubringerkurve 4 kann eine Vertiefung aufweisen (V- oder U-förmig), die im Wesentlichen zur Mittelachse M hin gerichtet ist. An der Außenseite der Zubringerkurve 4 befindet sich ein Schaber 11, der die pastöse Masse vom Trichterrand löst. Der Schaber 11 bewegt sich entsprechend der umlaufenden Bewegung der Zubringerkurve entlang der Trichterwand. Durch die umlaufende Bewegung der Zubringerkurve 4 wird die pastöse Masse im Trichter 1 im Wesentlichen zur Trichtermitte hin gefördert. In begrenztem Umfang wird die pastöse Masse auch nach unten in Richtung Auslassbereich 13 gefördert.

Innerhalb der Zubringerkurve 4 ist die Förderschnecke 5 vorgesehen. Die Förderschnecke 5 ist hier über die Welle 6 im oberen Bereich des Vakuumtrichters, z. B. hier im Deckel 2, drehbar im Lager 9 gelagert. Über den Antrieb 10 kann die Förderschnecke 5 um die Förderschneckenachse, die vorzugsweise der Längsachse M des Trichters entspricht, gedreht werden. Der Antrieb erfolgt über den Motor 10. Die Förderschnecke 5 erstreckt sich durch die Zubringerkurve 4. Die Förderschnecke 5 transportiert die pastöse Masse in Richtung des Förderwerks 14 und drückt durch ein mechanisch erzeugtes Δp die Füllmasse in die Förderwerkskammern des Förderwerks 14. In diesem Ausführungsbeispiel erstreckt sich die Förderschnecke bis in den Auslassbereich 13. Der Abstand zwischen Förderwerk 14 und Förderschneckenende ist vorzugsweise kleiner als der Abstand zwischen Förderwerk und Zubringerkurvenende. Der Außendurchmesser der Förderschnecke 5 ist kleiner als der größte Durchmesser der Zubringerkurve 4. Die Steigung der Förderschnecke kann gleichförmig, progressiv oder degressiv sein. Die Geometrie der Hüllkurve der Förderschnecke kann zylindrisch oder konisch sein oder aber eine andere beliebige Form einnehmen.

Durch die Kombination der Förderschnecke 5 und der Zubringerkurve 4 erfolgt eine Förderwirkung der pastösen Masse unabhängig vom Füllstand und unabhängig vom Differenzdruck zwischen Trichter 1 und Förderwerk 14. Somit kann eine vollständige Befüllung der Förderwerkskammern und damit eine hohe Portioniergenauigkeit am Auslass des Förderwerks 14 erreicht werden.

Die jeweiligen Antriebe bzw. die jeweiligen Motoren 17 und 10 für Zubringerkurve 4 und Förderschnecke 5 werden über eine Steuereinrichtung 18 angesteuert. Dabei kann die Drehzahl der Förderschnecke 5 sowie die Drehzahl der Zubringerkurve 4 abhängig oder unabhängig voneinander in einem festen oder variablen Drehzahlverhältnis geregelt werden. Der Antrieb der Zubringerkurve und die Förderschnecke kann auch mechanisch gekoppelt und somit durch einen Motor erfolgen, wobei die Kopplung der beiden Fördereinrichtungen in einem festen, aber auch in einem variablen Drehzahlverhältnis realisiert werden kann.

Die Steuereinrichtung 18 steuert auch das Förderwerk 14, d. h. z. B. dessen Förderleistung.

Die Förderschnecke 5 kann wesentlich schneller drehen als die Zubringerkurve 4, weil der Außendurchmesser wesentlich kleiner ist als der größte Durchmesser der Zubringerkurve 4. Dadurch kann ein die Masse schädigendes Überfördern weitestgehend verhindert werden. Durch die vollständige Befüllung des Förderwerks ist auch eine kontinuierliche Portionierung aus dem Förderwerk mit einem konstanten Füllstrom möglich.

Die Drehzahlregelung der Förderschnecke 5 und/oder Zubringerkurve 4 kann dabei unabhängig, jedoch vorzugsweise abhängig von verschiedenen Parametern erfolgen. Die Regelung erfolgt beispielsweise in Abhängigkeit von mindestens einem der folgenden Parameter:

Druck im geschlossenen Trichter, Druck im Bereich der Förderschnecke bzw. im Einlassbereich des Förderwerks 14, Druck im Förderwerk oder in dessen Auslassbereich, Temperatur und Art der Masse, Luftgehalt der Masse, etc.

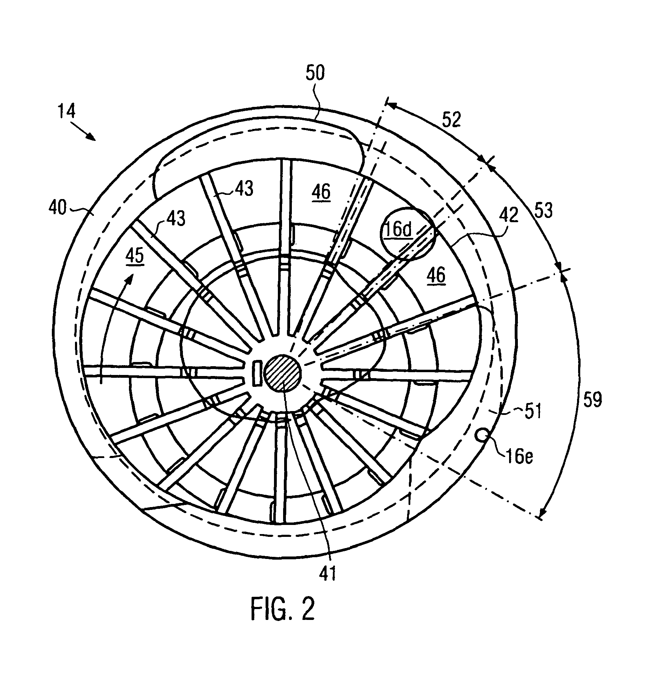

Zur Messung des Drucks können beispielsweise wahlweise entsprechende Drucksensoren 16a im Trichter und/oder 16b im Bereich der Förderschnecke, 16c im Einlassbereich des Förderwerks 14 oder 16d und 16e jeweils im Förderwerk 14 oder dessen Auslassbereich vorgesehen sein (siehe auch Fig. 2). Zur Bestimmung des Luftgehalts kann auch eine Einrichtung zur Messung der Kompressibilität vorgesehen sein. Die unterschiedlichen Parameter können entweder der Steuerung 18 über die entsprechenden Druckmesser, Temperaturmesser, Füllstandsmesser oder Kompressibilitätsmesser zugeführt werden oder aber über eine entsprechende Tastatur, die mit der Steuerung 18 verbunden ist, eingegeben werden.

In Fig. 2 ist ein Beispiel für ein Förderwerk 14 in Form einer Flügelzellenpumpe gezeigt, die beispielsweise auch in der EP 1040758 B1 beschrieben ist. Wie aus Fig. 2 ersichtlich ist, besteht die Flügelzellenpumpe aus einem Pumpengehäuse 40 und einem darin exzentrisch angeordneten in Drehung versetzten Rotor mit einer Pumpenwelle 41. In dem Rotor sind radial verschiebbar gelagerte Flügel 43 angeordnet, die mit der Wandung 42 des Pumpengehäuses 40, dem Boden 45 und dem Deckel des Gehäuses (nicht dargestellt) und der Außenfläche des Rotors 41 Förderzellen bilden. Das Pumpengehäuse 40 weist einen Bräteinlass 50 und einen Brätauslass 51 auf. Der Einlass 50 ist mit dem Auslassbereich 13 des Vakuumtrichters 1 verbunden. Es ist darüber hinaus auch noch eine in Fig. 1 schematisch dargestellte Vakuumpumpe 19 vorgesehen, die einen Unterdruck im Förderwerk 14 erzeugt, um der pastösen Masse Luft zu entziehen. Über eine separate Vakuumleitung wird mit dieser Vakuumpumpe 19 auch der Unterdruck im Vakuumtrichter erzeugt.

Die Kombination und Steigung der Zubringerkurve 4 und der Förderschnecke 5 sind so, dass sich deren Achsen in gleiche Richtung drehen. Es ist jedoch auch eine gegenläufige Drehbewegung möglich. Abhängig von den beiden Drehrichtungen zueinander stehen auch die Drehzahlen dieser beiden Fördereinrichtungen in einem bestimmten Verhältnis zueinander.

Auch die Förderleistung, d. h. die Drehzahl des Förderwerks 14, wird über die Steuerung 18 gesteuert.

Bei einem Verfahren zum Abfüllen von pastöser Masse, insbesondere Wurstbrät wird pastöse Masse aus einem Vorratsbehälter über das Zuführrohr dem Einlass 7 des Vakuumtrichters 1 zugeführt. Die umlaufende Zubringerkurve 4 wird über den Antrieb 17 um die Zubringerkurvenachse M gedreht. Die umlaufende Zubringerkurve 4 fördert die pastöse Masse im Wesentlichen zur Trichtermitte hin. Gleichzeitig wird über den Antrieb 10 die Förderschnecke 5 in gleicher Richtung oder in entgegengesetzter Richtung wie die Zubringerkurve 4 um die Förderschneckenachse, hier die Mittelachse M, gedreht. Die Förderschnecke 5 transportiert dabei die Masse nach unten in Richtung des Förderwerks 14 und drückt mechanisch die pastöse Masse in die Förderwerkskammern, beispielsweise im Bereich des Bräteinlasses 50 in die Förderzellen 46 der in Fig. 2 dargestellten Flügelzellenpumpe. Die Steuerung der Antriebe der Zubringerkurve und der Förderschnecke erfolgt über die Steuereinrichtung 18. So wird eine vollständige Befüllung der Förderwerkskammern und damit eine hohe Portioniergenauigkeit am Auslass des Förderwerks erreicht. Das Förderwerk fördert die pastöse Masse dann in das Füllrohr 15, das in bekannter Weise die pastöse Masse in Wursthüllen füllt.

Bei dem erfindungsgemäßen Verfahren kann sich die Förderschnecke wesentlich schneller drehen als die Zubringerkurve 4, weil der Außendurchmesser der Förderschnecke wesentlichen kleiner ist als der größte Durchmesser der Zubringerkurve. Dadurch kann ein die Masse schädigendes Überfördern weitgehend verhindert werden. Durch eine vollständige Befüllung des Förderwerks ist eine kontinuierliche Portionierung aus dem Förderwerk mit einem konstanten Füllstrom möglich.

Durch die erfindungsgemäße Merkmalskombination von Zubringerkurve und Förderschnecke ist es möglich, das Förderwerk 14 aus einem Trichter, insbesondere evakuiertem Vakuumtrichter, kontinuierlich und vollständig mit pastöser Masse zu befüllen, unabhängig vom Evakuierungsgrad und vom Füllstand der pastösen Masse. Die Förderleistung kann somit erhöht werden.

Die vorliegende Erfindung wurde hier in Zusammenhang mit einem Vakuumtrichter 1 beschrieben. Die erfindungsgemäße Merkmalskombination von Zubringerkurve und Förderschnecke ist jedoch auch in Verbindung mit offenen Trichtern möglich.

Bei dem in Fig. 1 gezeigten Ausführungsbeispiel erfolgt die Lagerung und der Antrieb der Förderschnecke 5 im oberen Bereich, d.h., hier im Deckel 2, der Füllmaschine. Die vorliegende Erfindung ist jedoch nicht hierauf beschränkt. Die Lagerung und der Antrieb der Förderschnecke 5 können beispielsweise ebenfalls von unten erfolgen, d.h. parallel zum Antrieb der Zubringerkurve.

## Patentansprüche

1. Füllmaschine zum Abfüllen von pastöser Masse, insbesondere Wurstbrät mit
einem Trichter (1),
einem unterhalb des Trichters (1) angeordneten Förderwerk (14), sowie
einer Zuführeinrichtung (4, 5) zum Zuführen der pastösen Masse aus dem Trichter (1) in das Förderwerk (14), die eine angetriebene Förderschnecke (5) umfasst,
**dadurch gekennzeichnet, dass**
die Zuführeinrichtung (4, 5) weiter eine angetriebene Zubringerkurve (4) umfasst und die Förderschnecke innerhalb der Zubringerkurve (4) angeordnet ist..

2. Füllmaschine nach Anspruch 1, **dadurch gekennzeichnet, dass** die Förderschnecke (5) zentrisch zur Zubringerkurvenachse angeordnet ist.

3. Füllmaschine nach Anspruch 1 oder 2, **dadurch gekennzeichnet, dass** die Zubringerkurve (4) am Trichterrand als innen offene Schnecke angeordnet ist und die pastöse Masse im Wesentlichen zur Trichtermitte hin fördert, wobei die Förderschnecke (5) derart ausgebildet ist, dass sie die pastöse Masse nach unten zum Förderwerk (14) fördert.

4. Füllmaschine nach mindestens einem der Ansprüche 1 bis 3, **dadurch gekennzeichnet, dass** die Zubringerkurve (4) und die Förderschnecke (5) jeweils einen eigenen Antrieb (10, 17) aufweisen.

5. Füllmaschine nach mindestens einem der Ansprüche 1 bis 4, **dadurch gekennzeichnet, dass** die Zubringerkurve (4) im unteren Endbereich des Trichters (1) und die Förderschnecke (5) im oberen oder unteren Endbereich des Trichters (1) drehbar gelagert sind.

6. Füllmaschine nach mindestens einem der Ansprüche 1 bis 5, **dadurch gekennzeichnet, dass** die Füllmaschine weiter eine Steuereinrichtung (18) umfasst, über die die Drehzahl der Förderschnecke (5) sowie die Drehzahl der Zubringerkurve (4) abhängig oder unabhängig voneinander geregelt werden kann.

7. Füllmaschine nach mindestens einem der Ansprüche 1 bis 6, **dadurch gekennzeichnet, dass** der Trichter (1) ein geschlossener Vakuumtrichter ist.

8. Füllmaschine nach mindestens einem der Ansprüche 1 bis 7, **dadurch gekennzeichnet, dass** die Drehzahlregelung der Förderschnecke (5) und/oder der Zubringerkurve abhängig von zumindest einem Parameter aus folgender Gruppe geregelt wird:
Druck im geschlossenen Trichter (1), Druck im Bereich der Förderschnecke (5) oder im Einlassbereich des Förderwerks (14), Druck im Förderwerk (14) oder dessen Auslassbereich, Temperatur und Art der Masse, Luftgehalt der Masse, Förderleistung des Förderwerks (14).

9. Verfahren zum Abfüllen von pastöser Masse insbesondere Wurstbrät mit folgenden Schritten:
Zuführen von pastöser Masse aus einem Trichter (1) in ein Förderwerk (14), das die pastöse Masse in ein Füllrohr (15) zum Befüllen von Würsten fördert,
**dadurch gekennzeichnet, dass**
die pastöse Masse aus dem Trichter (1) durch die kombinierte Wirkung aus einer angetriebenen Zubringerkurve (4) und einer innerhalb der Zubringerkurve (4) angeordneten angetriebene Förderschnecke (3) dem Förderwerk (14) zugeführt wird.

10. Verfahren nach Anspruch 9, **dadurch gekennzeichnet, dass** die Zubringerkurve (4) die pastöse Masse im Wesentlichen zur Trichtermitte hin fördert und die Förderschnecke (5) die pastöse Masse nach unten zum Förderwerk (14) hin fördert.

11. Verfahren nach Anspruch 9 oder 10, **dadurch gekennzeichnet, dass** die Drehzahl der Förderschnecke (5) sowie die Drehzahl der Zubringerkurve (4) abhängig oder unabhängig voneinander geregelt wird.

12. Verfahren nach mindestens einem der Ansprüche 9 bis 11, **dadurch gekennzeichnet, dass** die Drehzahlregelung der Förderschnecke (5) und/oder der Zubringerkurve abhängig von zumindest einem Parameter aus folgender Gruppe geregelt wird:
Druck im geschlossenen Trichter (1), Druck im Bereich der Förderschnecke (5) oder im Einlassbereich des Förderwerks (14), Druck im Förderwerk (14) oder dessen Auslassbereich, Temperatur und Art der Masse, Förderleistung des Förderwerks.

13. Verfahren nach mindestens einem der Ansprüche 9 bis 12, **dadurch gekennzeichnet, dass** sich die Förderschnecke (5) mit höherer Drehzahl dreht als die Zubringerkurve (4).

## Claims

1. Filling machine for charging paste mass, in particular sausage meat, with
a hopper (1),
a conveying mechanism (14) arranged below the hopper (1), and
a feed device (4, 5) for feeding the paste mass from the hopper (1) into the conveying mechanism (14), the feed device comprising a driven screw conveyor (5),
**characterised in that**
the feed device (4, 5) comprises a feeder curve (4) and the screw conveyor is arranged within the feeder curve (4).

2. Filling machine according to Claim 1, **characterised in that** the screw conveyor (5) is arranged centrally to the axis of the feeder curve.

3. Filling machine according to Claim 1 or 2, **characterised in that** the feeder curve (4) at the edge of the hopper is arranged as a helix, open on the inside, and the paste mass is essentially conveyed to the centre of the hopper, wherein the screw conveyor (5) is formed such that it conveys the paste mass downwards to the conveying mechanism (14).

4. Filling machine according to at least one of the Claims 1 to 3, **characterised in that** the feeder curve (4) and the screw conveyor (5) each comprise their own drive (10, 17).

5. Filling machine according to at least one of the Claims 1 to 4, **characterised in that** the feeder curve (4) is rotationally supported in the lower end region of the hopper (1) and the screw conveyor (5) is rotationally supported in the upper or lower end region of the hopper (1).

6. Filling machine according to at least one of the Claims 1 to 5, **characterised in that** the filling machine also comprises a control device (18) through which the rotational speed of the screw conveyor (5) and the rotational speed of the feeder curve (4) can be closed-loop controlled dependently or independent of one another.

7. Filling machine according to at least one of the Claims 1 to 6, **characterised in that** the hopper (1) is a closed vacuum hopper.

8. Filling machine according to at least one of the Claims 1 to 7, **characterised in that** the closed-loop rotational speed control of the screw conveyor (5) and / or the feeder curve is controlled dependent on at least one parameter from the following group:
pressure in the closed hopper (1), pressure in the region of the screw conveyor (5) or in the inlet region of the conveying mechanism (14), pressure in the conveying mechanism (14) or its outlet region, temperature and the type of mass, air content of the mass, conveying throughput of the conveying mechanism (14).

9. Method of charging paste mass, in particular sausage meat, with the following steps:
feeding of paste mass from a hopper (1) into a conveying mechanism (14), which conveys the paste mass into a filling tube (15) for filling sausages,
**characterised in that**
the paste mass is fed from the hopper (1) to the conveying mechanism (14) through the combined effect of a driven feeder curve (4) and a driven screw conveyor (3) arranged within the feeder curve (4).

10. Method according to Claim 9, **characterised in that** the feeder curve (4) conveys the paste mass essentially to the centre of the hopper and the screw conveyor (5) conveys the paste mass downwards to the conveying mechanism (14).

11. Method according to Claim 9 or 10, **characterised in that** the rotational speed of the screw conveyor (5) and the rotational speed of the feeder curve (4) are closed-loop controlled dependently or independent of one another.

12. Method according to at least one of the Claims 9 to 11, **characterised in that** the closed-loop rotational speed control of the screw conveyor (5) and / or the feeder curve is controlled dependent on at least one parameter from the following group:
pressure in the closed hopper (1), pressure in the region of the screw conveyor (5) or in the inlet region of the conveying mechanism (14), pressure in the conveying mechanism (14) or its outlet region, temperature and the type of mass, conveying throughput of the conveying mechanism.

13. Method according to at least one of the Claims 9 to 12, **characterised in that** the screw conveyor (5) rotates at a higher speed than the feeder curve (4).

## Revendications

1. Machine de remplissage pour le remplissage de masse pâteuse, notamment de chair à saucisse, pourvue d'un entonnoir (1),
d'un dispositif d'avancement (14) disposé au-dessous de l'entonnoir (1),
ainsi que d'un dispositif d'alimentation (4, 5) pour amener la masse pâteuse de l'entonnoir (1) dans le dispositif d'avancement (14), qui comprend une vis sans fin (5) entraînée,
**caractérisée en ce que**
le dispositif d'alimentation (4, 5) comprend en outre une came de transport (4) entraînée et la vis sans fin est disposée à l'intérieur de la came de transport (4).

2. Machine de remplissage selon la revendication 1, **caractérisée en ce que** la vis sans fin (5) est disposée au centre par rapport à l'axe de la came de transport.

3. Machine de remplissage selon la revendication 1 ou 2, **caractérisée en ce que** la came de transport (4) est disposée au bord de l'entonnoir sous la forme d'une vis ouverte à l'intérieur et transporte la masse pâteuse essentiellement vers le milieu de l'entonnoir, la vis sans fin (5) étant réalisée de telle sorte qu'elle transporte la masse pâteuse vers le bas vers le dispositif d'avancement (14).

4. Machine de remplissage selon au moins l'une quelconque des revendications 1 à 3, **caractérisée en ce que** la came de transport (4) et la vis sans fin (5) présentent chacune un propre entraînement (10, 17).

5. Machine de remplissage selon au moins l'une quelconque des revendications 1 à 4, **caractérisée en ce que** la came de transport (4) est logée en rotation dans une zone terminale inférieure de l'entonnoir (1) et la vis sans fin (5) dans la zone terminale supérieure ou inférieure de l'entonnoir (1).

6. Machine de remplissage selon au moins l'une quelconque des revendications 1 à 5, **caractérisée en ce que** la machine de remplissage comprend en outre un dispositif de commande (18), par lequel la vitesse de rotation de la vis sans fin (5) ainsi que la vitesse de rotation de la came de transport (4) peuvent être réglées en fonction ou indépendamment l'une de l'autre.

7. Machine de remplissage selon au moins l'une quelconque des revendications 1 à 6, **caractérisée en ce que** l'entonnoir (1) est un entonnoir à vide fermé.

8. Machine de remplissage selon au moins l'une quelconque des revendications 1 à 7, **caractérisée en ce que** la vitesse de rotation de la vis sans fin (5) et/ou de la came de transport est réglée en fonction d'au moins un paramètre du groupe suivant :
pression dans l'entonnoir (1) fermé, pression dans la zone de la vis sans fin (5) ou dans la zone d'entrée du dispositif d'avancement (14), pression dans le dispositif d'avancement (14) ou sa zone de sortie, température et type de masse, teneur en air de la masse, capacité de transport du dispositif d'avancement (14).

9. Procédé de remplissage de masse pâteuse, notamment de chair à saucisse, comportant les étapes suivantes :
amenée de masse pâteuse depuis un entonnoir (1) dans un dispositif d'avancement (14) qui transporte la masse pâteuse dans un tube de remplissage (15) pour le remplissage de saucisses,
**caractérisé en ce que**
la masse pâteuse est amenée au dispositif d'avancement (14) depuis l'entonnoir (1) grâce à l'action combinée d'une came de transport (4) entraînée et d'une vis sans fin (3) entraînée, disposée à l'intérieur sein de la came de transport (4).

10. Procédé selon la revendication 9, **caractérisé en ce que** la came de transport (4) transporte la masse pâteuse essentiellement vers le milieu de l'entonnoir et la vis sans fin (5) transporte la masse pâteuse vers le bas vers le dispositif d'avancement (14).

11. Procédé selon la revendication 9 ou 10, **caractérisé en ce que** la vitesse de rotation de la vis sans fin (5) ainsi que la vitesse de rotation de la came de transport (4) sont réglées en fonction ou indépendamment l'un de l'autre.

12. Procédé selon au moins l'une quelconque des revendications 9 à 11, **caractérisé en ce que** la vitesse de rotation de la vis sans fin (5) et/ou de la came de transport est réglée en fonction d'au moins un paramètre du groupe suivant :
pression dans l'entonnoir (1) fermé, pression dans la zone de la vis sans fin (5) ou dans la zone d'entrée du dispositif d'avancement (14), pression dans le dispositif d'avancement (14) ou sa zone de sortie, température et type de masse, capacité de transport du dispositif d'avancement (14)

13. Procédé selon au moins l'une quelconque des revendications 9 à 12, **caractérisé en ce que** la vis sans fin (5) tourne à une vitesse de rotation supérieure à celle de la came de transport (4).
